(19) Europäisches Patentamt
European Patent Office
Office européen des brevets

(11) **EP 4 069 487 B1**

(12) **EUROPEAN PATENT SPECIFICATION**

(45) Date of publication and mention
of the grant of the patent:
**06.08.2025  Bulletin 2025/32**

(21) Application number: **20828628.6**

(22) Date of filing: **02.12.2020**

(51) International Patent Classification (IPC):
**B29B 15/12** (2006.01)    **B29C 70/20** (2006.01)

(52) Cooperative Patent Classification (CPC):
**B32B 5/024; B29C 70/20; B32B 5/02; B32B 5/08;
B32B 5/10; B32B 27/12;** B32B 2260/023;
B32B 2260/046; B32B 2262/101; B32B 2262/106;
B32B 2262/14; B32B 2603/00; Y02E 10/72

(86) International application number:
**PCT/US2020/062771**

(87) International publication number:
**WO 2021/113277 (10.06.2021 Gazette 2021/23)**

(54) **FIBER REINFORCED MATERIALS WITH IMPROVED FATIGUE PERFORMANCE**

FASERVERSTÄRKTE MATERIALIEN MIT VERBESSERTEM ERMÜDUNGSVERHALTEN

MATÉRIAUX COMPOSITES RENFORCÉS PAR DES FIBRES AYANT UNE RÉSISTANCE
AMÉLIORÉE À LA FATIGUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.12.2019 EP 19214303**

(43) Date of publication of application:
**12.10.2022  Bulletin 2022/41**

(73) Proprietor: **Owens Corning Intellectual Capital,
LLC
Toledo, OH 43659 (US)**

(72) Inventors:
• **CARLIER, Eric**
**73110 La Croix de la Rochette (FR)**
• **BEGUINEL, Johanna**
**73100 Aix-les-Bains (FR)**
• **VAN DEN BROEK, Gideon**
**Bowling Green, Ohio 43402 (US)**

(74) Representative: **Novagraaf Group
Chemin de l'Echo 3
1213 Onex / Geneva (CH)**

(56) References cited:
WO-A1-2019/126252     WO-A1-2019/126252
US-A1- 2014 147 620    US-A1- 2014 147 620

• SAMULI KORKIAKOSKI ET AL: "Influence of
specimen type and reinforcement on measured
tension?tension fatigue life of unidirectional
GFRP laminates", INTERNATIONAL JOURNAL
OF FATIGUE, vol. 85, 1 April 2016 (2016-04-01),
AMSTERDAM, NL, pages 114 - 129,
XP055692738, ISSN: 0142-1123, DOI: 10.1016/
j.ijfatigue.2015.12.008
• LIU HAOLONG ET AL: "Fatigue modeling for
carbon/epoxy unidirectional composites under
various stress ratios considering size effects",
INTERNATIONAL JOURNAL OF FATIGUE, vol.
120, 3 April 2014 (2014-04-03), pages 184 - 200,
XP085584470, ISSN: 0142-1123, DOI: 10.1016/
J.IJFATIGUE.2018.11.009
• JULIA BRUNBAUER ET AL: "Mechanical
properties, fatigue damage and microstructure
of carbon/epoxy laminates depending on fibre
volume content", INTERNATIONAL JOURNAL OF
FATIGUE, vol. 70, 1 January 2015 (2015-01-01),
AMSTERDAM, NL, pages 85 - 92, XP055692856,
ISSN: 0142-1123, DOI: 10.1016/
j.ijfatigue.2014.08.007

EP 4 069 487 B1

- **SAMULI KORKIAKOSKI ET AL: "Influence of specimen type and reinforcement on measured tension-tension fatigue life of unidirectional GFRP laminates", INTERNATIONAL JOURNAL OF FATIGUE, vol. 85, 1 April 2016 (2016-04-01), AMSTERDAM, NL, pages 114 - 129, XP055692738, ISSN: 0142-1123, DOI: 10.1016/ j.ijfatigue.2015.12.008**
- **LIU HAOLONG ET AL: "Fatigue modeling for carbon/epoxy unidirectional composites under various stress ratios considering size effects", INTERNATIONAL JOURNAL OF FATIGUE, vol. 120, 3 April 2014 (2014-04-03), pages 184 - 200, XP085584470, ISSN: 0142-1123, DOI: 10.1016/ J.IJFATIGUE.2018.11.009**
- **JULIA BRUNBAUER ET AL: "Mechanical properties, fatigue damage and microstructure of carbon/epoxy laminates depending on fibre volume content", INTERNATIONAL JOURNAL OF FATIGUE, vol. 70, 1 January 2015 (2015-01-01), AMSTERDAM, NL, pages 85 - 92, XP055692856, ISSN: 0142-1123, DOI: 10.1016/ j.ijfatigue.2014.08.007**

## Description

CROSS-REFERENCE TO RELATED APPLICATIONS

This application claims priority to and any benefit of European Patent Application No. 19214303.0, filed December 6, 2019.

FIELD

The general inventive concepts described herein relate to fiber reinforced composite materials and, more particularly, to unidirectional laminates with improved tensile and fatigue performance.

BACKGROUND

S. Korkiakoski et al (International Journal of Fatigue 85 (2016) 114-129) relates to the influence of specimen type and reinforcement on measured tension-tension fatigue life of unidirectional GFRP laminates.

Reinforcement fibers are used in a variety of products. The fibers can be used as reinforcements in products such as laminates, reinforced paper and tape, and woven products. During the fiber forming and collecting process, numerous fibers are bundled together as a strand. Several strands can be gathered together to form a fiber bundle used to reinforce a polymer matrix to provide structural support to products, such as molded plastic products.

Reinforcing glass strands are conventionally prepared by mechanically drawing molten glass streams flowing by gravity from multiple orifices of bushings filled with molten glass to form filaments which are gathered together into base strands, and then collected. During the drawing of the glass filaments, and before they are gathered together into strands, the glass filaments are often coated with a sizing composition, generally an aqueous sizing composition, using a rotating roller. The sizing composition (also referred to as "size") is traditionally applied during manufacture of the glass filaments to protect the filaments from the abrasion resulting from the rubbing of the filaments at high speed during the forming and subsequent processes, thus acting as lubricant. It also makes it possible to remove or avoid electrostatic charges generated during this rubbing. Additionally, during the production of reinforced composite materials, the size improves the wetting of the glass and the impregnation of the strand by the material to be reinforced.

After the reinforcing fibers are produced, they are frequently processed on looms or other weaving devices to produce reinforcement fabrics. Many reinforcement fabrics include lengthwise fibers (warp fibers) arranged side by side and substantially parallel to one another, along with cross-wise fibers (weft fibers). Unidirectional fabrics are fabrics with at least approximately 80% of the total fibers in a single direction, generally in the warp direction, also known as the load direction of the laminate. Accordingly, if a unidirectional fabric includes weft fibers, they generally account for less than 20% of the total fibers in the fabric and provide a backing structure to allow for the knitting/stitching of the fabric, thus providing a stable textile structure.

As noted above, the fabric is useful for forming fiber-reinforced structural components. For example, the fabric can be stacked up or otherwise layered to form a spar cap of a blade of a wind energy turbine. In particular, several layers of fabric may be arranged on top of each other to form a laminate-structural component. The fabric layers are arranged within specific areas and regions of a mold. An infusion process introduces a curable matrix material (a resin) into the mold in order to penetrate the layers of the fabric. A vacuum can be applied to the mold during the infusion process to press the layers together and aid the resin in penetrating the layers. Once sufficiently infused through the fabric, the resin is allowed to harden forming the structural component.

Components that employ such a fiber-reinforcement generally require high tensile and fatigue properties. For example, a spar cap of a blade of a wind energy turbine must withstand near constant stress from significant forces (e.g., wind, centripetal force) during its usable lifespan. There remains a need for increasing the modulus of a laminate over a range of fiber weight fraction (FWF), while maintaining or increasing fatigue performance.

SUMMARY

In one aspect, the invention provides a unidirectional laminate comprising a glass fiber reinforced composite material, characterized in that: the reinforced composite material has a main relaxation temperature ($T\alpha$) in a range between 110 °C and 140 °C. The composite comprises a plurality of unidirectional reinforcement fibers coated with a sizing composition and a matrix resin. The unidirectional laminate has a tensile modulus of at least 45 GPa at a fiber volume fraction greater than or equal to 50% and fatigue mechanical performance of at least 450 MPa at 1 MM cycles, measured according to ASTM E 739-91. The reinforcement fibers are glass fibers.

In one embodiment, the unidirectional laminate may comprise a fiber reinforced composite material having a storage modulus drop ($\Delta E'$) between about 15 and 35 GPa, said composite comprising a plurality of unidirectional reinforcement fibers coated with a sizing composition and a matrix resin, wherein the unidirectional laminate has a tensile modulus of at least 45 GPa at a fiber volume fraction greater than or equal to 50% and fatigue mechanical performance of at least 450 MPa at 1 MM cycles, measured according to ASTM E 739-91.

In one embodiment, the unidirectional laminate may comprise a fiber reinforced composite material having a main relaxation temperature ($T\alpha$) in a range be-

tween about 110 °C and 140 °C and a storage modulus drop ($\Delta E'$) between about 15 and 35 GPa, said composite comprising a plurality of unidirectional reinforcement fibers coated with a sizing composition and a matrix resin, wherein the unidirectional laminate has a tensile modulus of at least 45 GPa at a fiber volume fraction greater than or equal to 50% and fatigue mechanical performance of at least 450 MPa at 1 MM cycles, measured according to ASTM E 739-91.

The reinforcement fibers are glass fibers. The glass fibers may have an elastic modulus of at least 85 GPa. Optionally, the glass fibers may have an elastic modulus of at least 88 GPa. Optionally, the glass fibers may have an elastic modulus of at least 89 GPa. The glass fibers may have tensile strength of at least 3,500 MPa.

In some exemplary embodiments, the glass fibers may have a glass composition comprising oxides selected from one or more of the group consisting of: $SiO_2$, $Al_2O_3$, MgO and CaO. In some exemplary embodiments, the glass fibers may have a glass composition comprising oxides selected from one or more of the group consisting of: $SiO_2$, $Al_2O_3$, MgO, CaO, $Na_2O$, $TiO_2$, $Fe_2O_3$ and $Li_2O$.

In some exemplary embodiments, the glass fibers may have a glass composition comprising from approximately 55% by weight to approximately 65% by weight $SiO_2$. Optionally, the glass composition may comprise from approximately 57% by weight to approximately 62% by weight $SiO_2$. Optionally, the glass composition may comprise from approximately 57.5% by weight to approximately 60% by weight $SiO_2$.

In some exemplary embodiments, the glass fibers may have a glass composition comprising from approximately 17% by weight to approximately 27% by weight $Al_2O_3$. Optionally, the glass composition may comprise from approximately 19% by weight to approximately 25% by weight $Al_2O_3$. Optionally, the glass composition may comprise from approximately 19.5% by weight to approximately 21% by weight $Al_2O_3$.

In some exemplary embodiments, the glass fibers may have a glass composition comprising from approximately 8% by weight to approximately 15% by weight MgO. Optionally, the glass composition may comprise from approximately 10.5% by weight to approximately 14% by weight MgO. Optionally, the glass composition may comprise from approximately 11% by weight to approximately 13% by weight MgO.

In some exemplary embodiments, the ratio of the weight percent of $Al_2O_3$ and MgO in the glass composition may be no greater than 2.0. Optionally, the ratio of the weight percent of $Al_2O_3$ and MgO in the glass composition may be no greater than 1.9. Optionally, the ratio of the weight percent of $Al_2O_3$ and MgO in the glass composition may be no greater than 1.8.

In some exemplary embodiments, the glass fibers may have a glass composition comprising from approximately 7% by weight to approximately 12% by weight CaO. Optionally, the glass composition may comprise from approximately 7.5% by weight to approximately 10% by weight CaO. Optionally, the glass composition may comprise from approximately 8% by weight to approximately 9.5% by weight CaO.

In some exemplary embodiments, the ratio of the weight percent of MgO to CaO in the glass composition is at least 1.2. Optionally, the ratio of the weight percent of MgO to CaO in the glass composition is at least 1.25.

In some exemplary embodiments, the glass fibers may have a glass composition comprising approximately 0% by weight to approximately 1% by weight $Na_2O$. Optionally, the glass composition may comprise from approximately 0% by weight to approximately 0.5% by weight $Na_2O$. Optionally, the glass composition may comprise from approximately 0.02% by weight to approximately 0.25% by weight $Na_2O$. Optionally, the glass composition may comprise no more than 1% by weight $Na_2O$. Optionally, the glass composition may comprise no more than 0.5% by weight $Na_2O$.

In some exemplary embodiments, the glass fibers may have a glass composition comprising approximately 0% by weight to approximately 2% by weight $TiO_2$. Optionally, the glass composition may comprise from approximately 0.2% by weight to approximately 1.5% by weight $TiO_2$. Optionally, the glass composition may comprise from approximately 0.5% by weight to approximately 1.2% by weight $TiO_2$. Optionally, the glass composition may comprise no more than 2% by weight $TiO_2$.

In some exemplary embodiments, the glass fibers may have a glass composition comprising approximately 0% by weight to approximately 2% by weight $Fe_2O_3$. Optionally, the glass composition may comprise from approximately 0% by weight to approximately 1% by weight $Fe_2O_3$. Optionally, the glass composition may comprise from approximately 0% by weight to approximately 0.5% by weight $Fe_2O_3$. Optionally, the glass composition may comprise no more than 2% by weight $Fe_2O_3$. Optionally, the glass composition may comprise no more than 1% by weight $Fe_2O_3$. Optionally, the glass composition may comprise no more than 0.5% by weight $Fe_2O_3$.

In some exemplary embodiments, the glass fibers may have a glass composition comprising no more than 0.5% by weight $Li_2O$. Optionally, the glass composition may comprise no more than 0.1% by weight $Li_2O$. Optionally, the glass composition may comprise no more than 0.05% by weight $Li_2O$.

In some exemplary embodiments, the glass fibres may have a glass composition comprising from approximately 55% by weight to approximately 65% by weight $SiO_2$, from approximately 17% by weight to approximately 27% by weight $Al_2O_3$, from approximately 8% by weight to approximately 15% by weight MgO, and from approximately 7% by weight to approximately 12% by weight CaO. In some exemplary embodiments, the glass fibres may have a glass composition comprising from approximately 55% by weight to approximately 65% by weight $SiO_2$, from approximately 17% by weight to approximately 27% by weight $Al_2O_3$, from approximately 8% by weight to approximately 15% by weight MgO, from approximately 7% by weight to approximately 12% by weight CaO, no more than 1% by weight $Na_2O$, no more than 2% by weight $TiO_2$, no more than 2% by weight $Fe_2O_3$, and no more than 0.5% by weight $Li_2O$.

In some exemplary embodiments, the sizing composition comprises an epoxy film former, a silane package, one or more lubricants, and an anti-static agent. In some exemplary embodiments, the sizing composition further includes one or more thermoplastic co-film formers. The thermoplastic co-film formers may be selected from one or more of the group consisting of: an unsaturated polyester co-film former, a functionalized epoxy polyvinyl acetate (PVAc) co-film former, and a polyvinyl pyrrolidone (PVP) co-film former. The thermoplastic co-film former in the sizing composition may be present in an amount from about 1 to about 10 wt.% solids. In some exemplary embodiments, the sizing composition further includes a boron-containing compound.

Additionally, in some exemplary embodiments, the reinforced composite has a storage modulus drop ($\Delta E'$) between about 15 and 35 GPa.

In one embodiment, the unidirectional laminate may comprise:

    i. a fiber reinforced composite material comprising:

        a. a plurality of unidirectional reinforcement fibers coated with a sizing composition; and
        b. a matrix resin,

wherein the reinforcement fibers are glass fibers having a glass composition comprising from approximately 55% by weight to approximately 65% by weight $SiO_2$, from approximately 17% by weight to approximately 27% by weight $Al_2O_3$, from approximately 8% by weight to approximately 15% by weight MgO, and from approximately 7% by weight to approximately 12% by weight CaO, and wherein the sizing composition comprises an epoxy film former, a silane package, one or more lubricants, and an anti-static agent.

However, it should be appreciated that the glass fibers and sizing composition may be selected from any of the glass fibers and sizing compositions as described herein.

In another aspect, the invention provides a wind turbine blade comprising the claimed unidirectional laminate including a plurality of unidirectional reinforcement fibers coated with a sizing composition, and a cured matrix resin. The unidirectional laminate has a modulus of at least 45 GPa at a fiber volume fraction greater than or equal to 50% and fatigue mechanical performance of at least 450 MPa at 1 MM cycles, measured according to ASTM E 739-91.

The reinforcement fibers are glass fibers. The glass fibers may have an elastic modulus of at least about 85 GPa, including at least about 88 GPa, or at least about 89 GPa. The glass fibers may have tensile strength of at least 3,500 MPa.

In some exemplary embodiments, the sizing composition comprises an epoxy film former, a silane package, one or more lubricants, and an anti-static agent. In some exemplary embodiments, the sizing composition further includes one or more thermoplastic co-film formers, such as, for example, an unsaturated polyester co-film former, a functionalized epoxy polyvinyl acetate (PVAc) co-film former, or a polyvinyl pyrrolidone (PVP) co-film former. The thermoplastic co-film former in the sizing composition may be present in an amount from about 1 to about 10 wt.% solids. In some exemplary embodiments, the sizing composition further includes a boron-containing compound.

The features and embodiments as described herein apply to each and every aspect and each and every embodiment thereof *mutatis mutandis.*

Numerous other aspects, advantages, and/or features of the invention will become more readily apparent from the following detailed description of exemplary embodiments and from the accompanying drawings.

## BRIEF DESCRIPTION OF THE DRAWINGS

The invention, as well as embodiments and advantages thereof, are described below in greater detail, by way of example, with reference to the drawings in which:

    Figure 1 illustrates a conventional system for forming a structural laminate made from a composite material.

    Figure 2 graphically illustrates the relationship between laminate modulus and the laminate fiber volume fraction, using both a theoretical and experimental model.

    Figure 3 graphically illustrates the range of DMA properties, main relaxation temperature ($T\alpha$) and storage modulus ($\Delta E'$).

## DETAILED DESCRIPTION

Various exemplary embodiments will now be described more fully, with occasional reference to the accompanying drawings. These exemplary embodiments may, however, be embodied in different forms and should not be construed as being limited to the descriptions set forth herein. Rather, these exemplary embodiments are provided so that this disclosure will be thorough and complete, and will convey the invention to those skilled in the art.

Unless otherwise defined, all technical and scientific terms used herein have the same meaning as commonly understood by one of ordinary skill in the art to which these exemplary embodiments belong. The terminology used in the description herein is for describing particular exemplary embodiments only and is not intended to be limiting of the exemplary embodiments.

As used in the specification and the appended claims, the singular forms "a," "an," and "the" are intended to include the plural forms as well, unless the context clearly indicates otherwise.

Unless otherwise indicated, all numbers expressing quantities of ingredients, reaction conditions, and so forth used in the specification and claims are to be understood as being modified in all instances by the term "about." Accordingly, unless indicated to the contrary, the numerical parameters set forth in the specification and attached claims are approximations that may vary depending upon the desired properties sought to be obtained by the present exemplary embodiments. At the very least, and not as an attempt to limit the application of the doctrine of equivalents to the scope of the claims, each numerical parameter should be construed in light of the number of significant digits and ordinary rounding approaches.

Notwithstanding that the numerical ranges and parameters setting forth the broad scope of the exemplary embodiments are approximations, the numerical values set forth in the specific examples are reported as precisely as possible. Any numerical value, however, inherently contains certain errors necessarily resulting from the standard deviation found in their respective testing measurements. Every numerical range given throughout this specification and claims will include every narrower numerical range that falls within such broader numerical range, as if such narrower numerical ranges were all expressly written herein. Moreover, any numerical value reported in the Examples may be used to define either an upper or lower end-point of a broader compositional range disclosed herein.

Wind power and the use of wind turbines have gained increased attention as the quest for alternative energy sources continues. Wind power is considered by many to be a clean and environmentally friendly energy source. With an increasing attention towards generating more energy from wind power, technological advances in the art have allowed for increased sizes of wind turbines and new designs of wind turbine components. However, as the physical sizes and availability of wind turbines increase, so does the need to design components that balance high strength-to-weight ratios and long component lifespan to further allow wind power to be cost-competitive with other energy sources.

The size, shape, and weight of the turbine blades contribute significantly to the cost and energy efficiencies of wind turbines. An increase in blade size and decrease in blade weight generally increases the energy efficiency of a wind turbine. However, increasing the size of the blade also contributes to additional forces associated with operation of the turbine. This increase in forces leads to increased strain and fatigue on the components of the blade which, in turn, decreases the lifespan of the blade.

The structural makeup of a wind turbine blade is comprised of a matrix, often a cured resin, and a reinforcement material. The reinforcement material is comprised of a fibrous fabric. Reinforcement fibers used in the manufacture of materials for wind turbine blades include glass fibers, carbon fibers, and mixtures thereof. It is known in the art that bare glass fibers are not compatible with many common resins. That is, the resin will not cure to form a bond with the glass. The resulting composite material will include both materials, but without a strong bond between the two materials, the composite will not perform as well. This issue is overcome by applying a "sizing" to the glass prior to exposing the glass to the resin.

A sizing is a chemical composition (often a liquid, or aqueous composition) that is applied to the surface of the glass during production of glass fibers. The sizing may serve many purposes, one of which being to form a chemical "bridge" between the resin and the surface of the glass, making the two chemically compatible with one another and facilitating bonding between the resin and the glass which, in turn, will form a stronger composite material. Thus, a sizing will include chemical functional groups, one of which interacts with the glass, and another that interacts with the resin.

The invention is based, at least in part, on the discovery that tensile and fatigue properties of a unidirectional laminate are governed by key viscoelastic properties of unidirectional composites, such as, for example, main relaxation temperature $T_\alpha$ (f = 1Hz) and storage modulus drop $\Delta E'$ (defined as E' glassy - E' rubbery, normalized to 50% fiber weight fraction (FVF)). These viscoelastic properties can be tuned in various ways, such as by use of a high modulus glass fiber, a particular sizing chemistry, or a combination thereof. In some exemplary embodiments, particularly optimized viscoelastic properties are achieved by the use of a high modulus glass fiber in combination with a high-performance sizing chemistry. By optimizing the viscoelastic properties of a unidirectional composite, a unidirectional laminate may be produced with a modulus of at least 45 GPa at a fiber weight fraction (FWF) greater than or equal to 50% and fatigue mechanical performance (stress level extrapolated at 1 MM cycles) measured according to ISO 13003 (testing) and ASTM E 739-91 (data analysis) of at least 450 MPa.

Reinforcement Fibers

In some exemplary embodiments, the unidirectional fabrics include one or more reinforcement fibers, which may comprise glass fibers, carbon fibers, or hybrid mixtures of glass and carbon fibers. In some exemplary embodiments, the reinforcement fibers comprise glass fiber bundles used in continuous or discontinuous form. In some exemplary embodiments, the reinforcement fiber bundles comprise continuous fibers in the form of unbroken filaments, threads, strands, yarns, or rovings.

The glass may be any conventional glass composition, such as, for example, silica-based glass, borosilicate glasses such as E-glass, high-strength glass such as S-glass; H-glass, R-glass, E-type glass with lower amounts of boron or boron-free glass, E-CR glass, (e.g., Advantex® glass available from Owens Corning), and high modulus glass.

The reinforcement fibers may have an average diameter ranging from about 6 microns to about 30 microns, including between about 10 microns and 25 microns, and between about 12 microns and 24 microns, and between about 14 and 20 microns. The reinforcement fibers may comprise one or more fiber bundles having a bundle tex of about 100 to about 5000, including about 200 to about 4900, and about 300 to about 4800. In some exemplary embodiments, the reinforcement fibers have an average diameter of 15 microns to 18 microns. In some exemplary embodiments, the reinforcement fibers have a bundle tex of 2300 to 2500 tex. In some exemplary embodiments, the reinforcement fibers have an average diameter of 15 microns to 18 microns and a bundle tex of 2300 to 2500 tex.

As mentioned above, one way to tune the viscoelastic properties of a unidirectional laminate is to select a high modulus glass fiber. By 'high modulus glass fiber," it is meant a glass fiber that achieves an elastic modulus of at least about 85 GPa, measured in accordance with the sonic measurement procedure outlined in the report "Glass Fiber and Measuring Facilities at the U.S. Naval Ordnance Laboratory", Report Number NOLTR 65-87, June 23, 1965. In some exemplary embodiments, the high modulus glass fiber has an elastic modulus of at least about 88 GPa, at least about 88.5 GPa, at least about 89 GPa, and at least about 89.5 GPa.

The high modulus glass fiber may be of the type described in WO2019126252A1.

In some exemplary embodiments, the glass composition comprises about 55.0 to about 65.0 % by weight $SiO_2$, about 17.0 to about 27.0 % by weight $Al_2O_3$, about 8.0 to about 15.0 % by weight MgO, about 7.0 to about 12.0 % by weight CaO, about 0.0 to about 1.0 % by weight $Na_2O$, 0 to about 2.0 % by weight $TiO_2$, 0 to about 2.0 % by weight $Fe_2O_3$, and no more than 0.5 % by weight $Li_2O$. Advantageously, the ratio of the weight percent of alumina oxide and magnesium oxide ($Al_2O_3$/MgO) is no greater than 2.0, such as no greater than 1.9, and no greater than 1.8. Additionally, the ratio of the weight percent of magnesium oxide to calcium oxide (MgO/CaO) is advantageously at least 1.2.

In some exemplary embodiments, the glass composition may comprise about 57.0 to about 62.0 % by weight $SiO_2$, about 19.0 to about 25.0 % by weight $Al_2O_3$, about 10.5 to about 14.0 % by weight MgO, about 7.5 to about 10.0 % by weight CaO, about 0.0 to about 0.5 % by weight $Na_2O$, 0.2 to about 1.5 % by weight $TiO_2$, 0 to about 1.0 % by weight $Fe_2O_3$, and no more than 0.1 % by weight $Li_2O$. In some exemplary embodiments, the glass

composition includes an $Al_2O_3$/MgO ratio less than 2 and an MgO/CaO ratio of at least 1.25.

In some exemplary embodiments, the glass composition may comprise about 57.5 to about 60.0 % by weight $SiO_2$, about 19.5 to about 21.0 % by weight $Al_2O_3$, about 11.0 to about 13.0 % by weight MgO, about 8.0 to about 9.5 % by weight CaO, about 0.02 to about 0.25 % by weight $Na_2O$, 0.5 to about 1.2 % by weight $TiO_2$, 0 to about 0.5 % by weight $Fe_2O_3$, and no more than 0.05 % by weight $Li_2O$. In some exemplary embodiments, the glass composition includes an $Al_2O_3$/MgO no greater than 1.8 and an MgO/CaO ratio of at least 1.25.

The glass composition includes at least 55 % by weight, but no greater than 65 % by weight $SiO_2$. Including greater than 65 % by weight $SiO_2$ causes the viscosity of the glass composition to increase to an unfavorable level. Moreover, including less than 55 % by weight $SiO_2$ increases the liquidus temperature and the crystallization tendency. In some exemplary embodiments, the glass composition includes at least 57 % by weight $SiO_2$, including at least 57.5 % by weight, at least 58 % by weight, at least 58.5 % by weight, and at least 59 % by weight. In some exemplary embodiments, the glass composition includes no greater than 60.5 % by weight $SiO_2$, including no greater than 60.3 % by weight, no greater than 60.2 % by weight, no greater than 60 % by weight, no greater than 59.8 % by weight, and no greater than 59.5 % by weight.

In some exemplary embodiments, the glass composition has an $Al_2O_3$ concentration of at least 19.0 % by weight and no greater than 27 % by weight. Including greater than 27 % by weight $Al_2O_3$ causes the glass liquidus to increase to a level above the fiberizing temperature, which results in a negative $\Delta T$. Including less than 19 % by weight $Al_2O_3$ forms a glass fiber with an unfavorably low modulus. In some exemplary embodiments, the glass composition includes at least 19.5 % by weight $Al_2O_3$, including at least 19.7 % by weight, at least 20 % by weight, at least 20.25 % by weight, and at least 20.5 % by weight.

The glass composition advantageously includes at least 8.0 % by weight and no greater than 15 % by weight MgO. Including greater than 15 % by weight MgO will cause the liquidus temperature to increase, which also increases the glass's crystallization tendency. Including less than 8.0 % by weight forms a glass fiber with an unfavorably low modulus if substituted by CaO and an unfavorable increase in viscosity if substituted with $SiO_2$. In some exemplary embodiments, the glass composition includes at least 9.5 % by weight MgO, including at least 10 % by weight, at least 10.5 % by weight, at least 11 % by weight, at least 11.10 % by weight, at least 11.25 % by weight, at least 12.5 % by weight, and at least 13 % by weight MgO.

Another important aspect of the subject glass composition that makes it possible to achieve the desired mechanical and fiberizing properties, is having an $Al_2O_3$/MgO ratio of no greater than 2.0. It has been discovered that glass fibers having compositions with otherwise similar compositional ranges, but with $Al_2O_3/MgO$ ratios greater than 2.0, are unable to achieve tensile strengths of at least 4,800 MPa. In certain exemplary aspects, the combination of an $Al_2O_3$ concentration of at least 19 % by weight and an $Al_2O_3/MgO$ ratio of no greater than 2, such as no greater than 1.9, and no greater than 1.85, makes it possible to obtain glass fibers with desirable fiberizing properties and tensile strengths of at least 4,800 MPa.

The glass composition advantageously includes at least 7.0 % by weight and no greater than 12% by weight CaO. Including greater than 12 % by weight CaO forms a glass with a low elastic modulus. Including less than 7 % by weight will either unfavorably increase the liquidus temperature or viscosity depending on what the CaO is substituted with. In some exemplary embodiments, the glass composition includes at least 8.0 % by weight CaO, including at least 8.3 % by weight, at least 8.5 % by weight, at least 8.7 % by weight, and at least 9.0 % by weight.

In some exemplary embodiments, the combined amounts of $SiO_2$, $Al_2O_3$, MgO, and CaO in the glass composition is at least 98 % by weight, or at least 99 % by weight, and no greater than 99.5 % by weight. In some exemplary embodiments, the combined amounts of $SiO_2$, $Al_2O_3$, MgO, and CaO is between 98.3 % by weight and 99.5 % by weight, including between 98.5 % by weight and 99.4 % by weight and 98.7 % by weight and 99.3 % by weight.

In some exemplary embodiments, the total concentration of MgO and CaO in the glass composition is at least 10 % by weight and no greater than 22 % by weight, including between 13 % by weight and 21.8 % by weight and between 14 % by weight and 21.5 % by weight. In some exemplary embodiments, the total concentration of MgO and CaO is at least 20 % by weight.

The glass composition may include up to about 2.0 % by weight $TiO_2$. In some exemplary embodiments, the glass composition includes about 0.01 % by weight to about 1.0 % by weight $TiO_2$, including about 0.1 % by weight to about 0.8 % by weight and about 0.2 to about 0.7 % by weight.

The glass composition may include up to about 2.0 % by weight $Fe_2O_3$. In some exemplary embodiments, the glass composition includes about 0.01 % by weight to about 1.0 % by weight $Fe_2O_3$, including about 0.05 % by weight to about 0.6 % by weight and about 0.1 to about 0.5 % by weight.

In some exemplary embodiments, the glass composition includes less than 2.0 % by weight of the alkali metal oxides $Na_2O$ and $K_2O$, including between 0 and 1.5 % by weight. The glass composition may advantageously include both $Na_2O$ and $K_2O$ in an amount greater than 0.01 % by weight of each oxide. In some exemplary embodiments, the glass composition includes about 0 to about 1 % by weight $Na_2O$, including about 0.01 to about 0.5 % by weight, about 0.03 to about 0.3 % by weight, and 0.04 to about 0.1 % by weight. In some exemplary embodiments, the glass composition includes about 0 to about 1 % by weight $K_2O$, including about 0.01 to about 0.5 % by weight, about 0.03 to about 0.3 % by weight, and 0.04 to about 0.1 % by weight.

As used herein, the terms "weight percent," "% by weight," "wt.%," and "percent by weight" may be used interchangeably and are meant to denote the weight percent (or percent by weight) based on the total composition.

The glass compositions may be free or substantially free of $B_2O_3$, $Li_2O$, and fluorine, although either, or any, may be added in small amounts to adjust the fiberizing and finished glass properties and will not adversely impact the properties if maintained below several percent. As used herein, substantially free of $B_2O_3$, $Li_2O$, and fluorine means that the sum of the amounts of $B_2O_3$, $Li_2O$, and fluorine present is less than 1.0 % by weight of the composition. The sum of the amounts of $B_2O_3$, $Li_2O$, and fluorine present may be less than about 0.5 % by weight of the composition, including less than about 0.2 % by weight, less than about 0.1 % by weight, and less than about 0.05 % by weight.

The glass compositions may further include impurities and/or trace materials without adversely affecting the glasses or the fibers. These impurities may enter the glass as raw material impurities or may be products formed by the chemical reaction of the molten glass with furnace components. Non-limiting examples of trace materials include zinc, strontium, barium, and combinations thereof. The trace materials may be present in their oxide forms and may further include fluorine and/or chlorine. In some exemplary embodiments, the inventive glass compositions contain less than 1.0 % by weight, including less than 0.5 % by weight, less than 0.2 % by weight, and less than 0.1 % by weight of each of BaO, SrO, ZnO, $ZrO_2$, $P_2O_5$, and $SO_3$. Particularly, the glass composition may include less than about 5.0 % by weight of BaO, SrO, ZnO, $ZrO_2$, $P_2O_5$, and/or $SO_3$ combined, wherein each of BaO, SrO, ZnO, $ZrO_2$, $P_2O_5$, and $SO_3$ if present at all, is present in an amount of less than 1.0 % by weight.

The fiber tensile strength is also referred herein simply as "strength." In some exemplary embodiments, the tensile strength is measured on pristine fibers (*i.e.,* unsized and untouched laboratory produced fibers) using an Instron tensile testing apparatus according to ASTM D2343-09. Exemplary glass fibers formed form the above described inventive glass composition may have a fiber tensile strength of at least 3,500 MPa, including at least 4,000 MPa, at least 4,500 MPa, at least 4,800 MPa, at least 4,900 MPa, at least 4,950 MPa, at least 5,000 MPa, at least 5,100 MPa, at least 5,150 MPa, and at least 5,200 MPa. In some exemplary embodiments, the glass fibers formed from the above described composition have a fiber tensile strength of from about 3500 to about 5500 MPa, including about 4000 MPa to about 5,300, about 4,600 to about 5,250 MPa.

The glass fibers may be formed by any means known and traditionally used in the art. In some exemplary embodiments, the glass fibers are formed by obtaining raw ingredients and mixing the ingredients in the appropriate quantities to give the desired weight percentages of the final composition.

The components of the glass composition may be obtained from suitable ingredients or raw materials including, but not limited to, sand or pyrophyllite for $SiO_2$, limestone, burnt lime, wollastonite, or dolomite for CaO, kaolin, alumina or pyrophyllite for $Al_2O_3$, dolomite, dolomitic quicklime, brucite, enstatite, talc, burnt magnesite, or magnesite for MgO, and sodium carbonate, sodium feldspar or sodium sulfate for the $Na_2O$. In some exemplary embodiments, glass cullet may be used to supply one or more of the needed oxides.

In some exemplary embodiments, the continuous glass fibers are formed by drawing molten glass filaments from a bushing and coating the glass filaments with a sizing composition prior to gathering the glass filaments into a bundle, forming a fiber bundle.

Sizing Composition

When a high modulus glass fiber, having an elastic modulus of at least 85 GPa, is used in the unidirectional laminate, the sizing composition may comprise any conventional sizing composition known in the art, such as Owens Corning sizing compositions: SE 1500, WS 3000, WS2000, WS3200, and SE1200.

However as mentioned above, to allow for a wider variety of glass fiber compositions to be used in manufacturing a unidirectional laminate, another way to tune the viscoelastic properties of a composite is by way of a high-performance sizing chemistry, such as that disclosed in U.S. 8,129,018.

The high-performance sizing composition described herein may be used with any glass composition, while still demonstrating improved viscoelastic properties. In some exemplary embodiments, the high-performance sizing composition includes an epoxy film former, a silane package that includes an aminosilane coupling agent and an epoxy silane coupling agent, one or more lubricants, and an antistatic agent. In some exemplary embodiments, the high-performance sizing composition includes an epoxy film former, a silane package that includes an aminosilane coupling agent and an epoxy silane coupling agent, one or more lubricants, an antistatic agent, and at least one acid. In addition, the high-performance sizing composition may also contain a polyurethane or epoxy/polyurethane film former.

In some exemplary embodiments, the high-performance sizing composition includes an epoxy film forming polymer component. The epoxy film forming polymer component of the sizing composition may include epoxy resin emulsions that contain a low molecular weight epoxy resin and at least one surfactant. The film former functions to protect the fibers from damage during processing and imparts compatibility of the fibers with the matrix resin. In some exemplary embodiments, the epoxy resin has a molecular weight from 360-420 and an epoxy equivalent weight from 180-210, or a molecular weight 360-390 and an epoxy equivalent weight from 180-195, and or a molecular weight of 370-384 and an epoxy equivalent weight from 185-192. "Epoxy equivalent weight", as used herein, is defined by the molecular weight of the epoxy resin divided by the number of epoxy groups present in the compound. Useful epoxy resins contain at least one epoxy or oxirane group in the molecule, such as polyglycidyl ethers of polyhydric alcohols or thiols. Examples of suitable epoxy film forming resins include Epon® 828 (available from Hexion Specialties Chemicals Incorporated), DER 331 (available from Dow Chemicals), Araldite 6010 (available from Huntsman), and Epotuf 37-140 (available from Reichhold Chemical Co) and similar commercial emulsions like , Epi-rez 3510-w-60 and Epi-rez 3522-w-60 both from Hexion.

In some exemplary embodiments, the high-performance sizing composition includes one or more thermoplastic co-film formers, such as, for example, unsaturated polyester co-film former, functionalized epoxy polyvinyl acetate (PVAc) co-film formers, and polyvinyl pyrrolidone (PVP) co- film formers, such as Resyn 1037 from Celanese & PVP K90 from Ashland, respectively. In some exemplary embodiments, the co-film former is present in the sizing composition in an amount from about 1 to about 10 wt.% solids, based on the total solid content of the sizing composition. In some exemplary embodiments, the co-film former is present in the sizing composition in an amount from about 2 to about 9 wt.% solids. In some exemplary embodiments, the co-film former is present in the sizing composition in an amount from about 3 to about 8 wt. % solids.

Examples of suitable surfactants for use in the epoxy resin emulsion include, but are not limited to, Triton X-100, an octylphenoxypolyethoxyethanol (available from Union Carbide Corp.), Pluronic P103, an ethylene oxide/propylene oxide block copolymer (available from BASF), Pluronic F77, an ethylene oxide/propylene oxide block copolymer (available from BASF), Pluronic 10R5, an ethylene oxide/propylene oxide block copolymer (available from BASF), a block copolymer of ethylene oxide and propylene oxide such as Pluronic L101 (available from BASF), a polyoxyethylene-polyoxypropylene block copolymer such as Pluronic P105 (available from BASF), and an ethylene oxide/propylene oxide copolymer (available from BASF). Preferably, the epoxy resin emulsion contains two or more surfactants. In a preferred embodiment, a combination of (1) a block copolymer of ethylene oxide and propylene oxide and (2) a polyoxyethylene-polyoxypropylene block copolymer (such as Pluronic L101 and Pluronic P105) is used in the epoxy resin emulsion. The surfactant or surfactants may be present in the epoxy resin emulsion in an amount from 10-25%, or in an amount of from 15-20%, such as, for example about 18%.

In various exemplary embodiments, the epoxy resin emulsion is present in the high-performance sizing composition in an amount from about 60 to about 90% by weight solids, such as, for example, from about 70-80% by weight solids.

The surfactants, plasticizing agents, and dispersing agents may include aliphatic or aromatic polyalkoxylated compounds that are optionally halogenated, such as ethoxylated/propoxylated alkylphenols or ethoxylated/propoxylated fatty alcohols. These polyalkoxylated compounds can be block or random copolymers; amine-comprising compounds, for example amines, which are optionally alkoxylated, amine oxides, alkylamides, succinates and taurates, sugar derivatives, in particular of sorbitan, alkyl sulphates, which are optionally alkoxylated, alkyl phosphates and ether phosphates, which are optionally alkylated or alkoxylated. The sizing compositions may also include antistatic agents, such as specific organic cationic or non-ionic agents, such as fatty quaternary amines or imidazolinium derivatives, to avoid static electricity accumulation due to friction on guiding devices, such as ceramic guiding eyes.

The total amount of surfactant, plasticizing agent, dispersing agent, or combinations thereof in the high-performance sizing composition (dry solids content) may be in the range from about 2% by weight to about 30% by weight, or from about 4% by weight to about 20% by weight of the dry solids content. In some exemplary embodiments, a surfactant is present in about 0.25% to 15% by weight of solids content. In some exemplary embodiments, a plasticizer is present in 0 to about 10% by weight of solids content. In some exemplary embodiments, a dispersing agent is present in about 0.1% to 15% by weight of solids content. In some exemplary embodiments, antistatic agents are present in 0 to 8% by weight of solids content.

The coupling agent facilitates the adhesion of the size to the surface of the glass by inducing covalent bond with the film forming agents. The coupling agents may further generate covalent bonding or at least an interpenetrated network with the polymeric matrix in the case of non-reactive polymeric matrix. Another function of the coupling agents is to form a polysiloxane layer on the glass fiber that improves the durability in aggressive aging conditions like in wet, acidic or high temperature environment. The coupling agent may be a hydrolysable compound, for example a compound which can be hydrolyzed in the presence of an acid, such as acetic, lactic, citric, formic, tartaric, oxalic acids.

In one exemplary embodiment, the coupling agent comprises a silane package that includes at least one aminosilane coupling agent and at least one epoxy silane coupling agent. The coupling agents used in the silane package of the size composition may have hydrolyzable groups that can react with the glass surface to remove unwanted hydroxyl groups and one or more groups that can react with the film-forming polymer to chemically link the polymer with the glass surface. In particular, the coupling agents preferably include 1-3 hydrolyzable functional groups that can interact with the surface of the glass fibers and one or more organic groups that are compatible with the polymer matrix.

Suitable coupling agents for use in the silane package have a readily hydrolyzable bond to a silicon atom of the silane, or hydrolysis products thereof. Silane coupling agents which may be used in the present size composition may be characterized by the functional groups amino, epoxy, azido, vinyl, methacryloxy, ureido, and isocyanato. In addition, the coupling agents may include an acrylyl or methacrylyl group linked through non-hydrolyzable bonds to a silicon atom of the silane.

Coupling agents for use in the silane package include monosilanes containing the structure $Si(OR)_2$, where R is an organic group such as an alkyl group. Lower alkyl groups such as methyl, ethyl, and isopropyl are preferred. Silane coupling agents function to enhance the adhesion of the film forming agent to the glass fibers and to reduce the level of fuzz, or broken fiber filaments, during subsequent processing. Examples of suitable aminosilane coupling agents for use in the silane package include, but are not limited to aminopropyltriethoxysilane (A-1100 from GE Silicones), N-β-aminoethyl-γ-aminopropyltrimethoxysilane (A-1120 from GE Silicones), N-phenyl-γ-aminopropyltrimethoxysilane (Y-9669 from GE Silicones), and bis-γ-trimethoxysilylpropylamine (A-1170 from GE Silicones). Preferably, the aminosilane coupling agent is aminopropyltriethoxysilane (A-1100 from GE Silicones). The amino silane coupling agent may be present in the high-performance sizing composition in an amount from 0.4-0.8% by weight solids, such as in an amount from 0.4-0.6% by weight solids. Although not wishing to be bound by theory, it is believed that the presence of a minimal amount of aminosilane coupling agent in the sizing composition improves the mechanical properties of the final product. Too much aminosilane coupling agent added to the sizing composition may deteriorate mechanical properties.

Non-limiting examples of suitable epoxy silane coupling agents include a glycidoxy polymethylenetrialkoxysilane such as 3-glycidoxy-1-propyl-trimethoxysilane, an acryloxy or methacrylyloxypolymethylenetrialkoysilane such as 3-methacrylyloxy-1-propyltrimethoxysilane, γ-glycidoxypropyltrimethoxysilane (A-187 available from GE Silicones), γ-methacryloxypropyltrimethoxysilane (A-174 available from GE Silicones), α-chloropropyltrimethoxysilane (KBM-703 available from Shin-Etsu Chemical Co., Ltd.), α-glycidoxypropylmethyldiethoxysilane (A-2287 available from GE Silicones), and vinyl-tris-(2-methoxyethoxy)silane (A-172 from available GE Silicones). **In** at least one preferred embodiment, the epoxy silane coupling agent is γ-glycidoxypropyltrimethoxysilane (A-187) described above. The use of methacryloxy silanes such as A-174 improves the compatibility of the sized fibers with vinyl ester and polyester resins. The epoxy silane coupling agent may be present in the sizing composition in an amount from 10-20% by weight solids, or from 10-16% by weight solids, or from 10-14% by weight solids.

Additionally, the high-performance sizing composition contains at least one non-ionic lubricant. The non-ionic lubricant in the sizing composition acts as a "wet lubricant" and provides additional protection to the fibers during the filament winding process. In addition, the non-ionic lubricant helps to reduce the occurrence of fuzz. Especially suitable examples of non-ionic lubricants include PEG 200 Monolaurate (a polyethylene glycol fatty acid ester commercially available from Cognis) and PEG 600 Monooleate (Cognis). Other non-limiting examples include a polyalkylene glycol fatty acid such as PEG 600 Monostearate (a polyethylene glycol monostearate available from Cognis), PEG 400 Monostearate (Cognis), PEG 400 Monooleate (Cognis), and PEG 600 Monolaurate (Cognis). In a most preferred embodiment, the non-ionic lubricant is PEG 200 Monolaurate. The non-ionic lubricant may be present in the size composition in an amount from approximately 6-10% by weight solids, preferably from 7-9% by weight solids.

In addition to the non-ionic lubricant, the high-performance sizing composition also contains at least one cationic lubricant and at least one antistatic agent. The cationic lubricant aids in the reduction of interfilament abrasion. Suitable examples of cationic lubricants include, but are not limited to, a polyethyleneimine polyamide salt commercially available from Cognis under the trade name Emery 6760L, a stearic ethanolamide such as Lubesize K-12 (AOC), Cirrasol 185AE (Unichemie), and Cirrasol 185AN (Unichemie). The amount of cationic lubricant present in the sizing composition is preferably an amount sufficient to provide a level of the active lubricant that will form a coating with low fuzz development. In at least one exemplary embodiment, the cationic lubricant is present in the size composition in an amount from 0.01-1.0% by weight solids, preferably from 0.03-0.06% by weight solids. Antistatic agents especially suitable for use herein include antistatic agents that are soluble in the sizing composition. Examples of suitable antistatic agents include compounds such as Emerstat™ 6660A and Emerstat™ 6665 (quaternary ammonium antistatic agents available from Emery Industries, Inc.), and Larostat 264A (a quaternary ammonium antistatic agent available from BASF), tetraethylammonium chloride, and lithium chloride. Antistatic agents may be present in the sizing composition in an amount from 0.4-0.8% by weight solids, preferably from 0.4-0.6% by weight solids.

The total amount of the cationic lubricant and the antistatic agent that is present in the size composition may range from 0.4-0.8% by weight solids, preferably from 0.4-0.7% by weight solids. In some exemplary embodiments, the amount of cationic lubricant and antistatic agent present in the sizing composition is an amount that is less than or equal to approximately 1.0% by weight solids.

Further, the high-performance sizing composition may contain a small amount of at least one weak organic acid. Although not wishing to be bound by theory, it is believed that citric acid, a conventional acid additive for sizing compositions used to adjust the pH, may prematurely open the epoxy groups in the film formers and epoxy silanes if used in large amounts during the drying of the glass fibers, which may result in a reduction of mechanical properties. A trace amount of acetic acid, formic acid, succinic acid, and/or citric acid may be added to the inventive sizing composition to hydrolyze the silane in the coupling agent without prematurely opening the epoxy groups. In some exemplary embodiments, the organic acid is acetic acid. The organic acid (such as acetic acid) may be present in the size composition in an amount from 0.4-1.0% by weight solids, or from 0.5-0.7% by weight solids.

In addition, the high-performance sizing composition may contain a boron-containing compound that is capable of providing boron atoms to the size composition. It is hypothesized that the boron atoms released from the boron-containing compound act with the aminosilane at the glass interface to assist in adhering the remaining sizing components to the glass fiber. The combination of a boron containing compound such as boric acid in the sizing composition, together with an aminosilane (e.g., A-1100), and an epoxy silane (e.g., A-187), improves the mechanical properties of the final product. Non-limiting examples of suitable boron-containing compounds include boric acid and borate salts such as boron oxide, sodium tetraborate, potassium metaborate, potassium tetraborate, ammonium biborate, ammonium tetrafluoroborate, butylammonium tetrafluoroborate, calcium tetrafluoroborate, lithium fluoroborate, potassium tetrafluoroborate, sodium tetrafluoroborate, tetrabutylammonium tetrafluoroborate, tetraethylammonium tetrafluoroborate, and zinc tetrafluoroborate. In some exemplary embodiments, the boron-containing compound is boric acid. The boron-containing compound may be present in the sizing composition in an amount from 0.2-3.0% by weight solids, such as from 0.2-1.0% by weight solids, or from 0.2-0.6% by weight solids.

The combination of the organic acid (e.g., acetic acid) and boric acid in the size composition desirably imparts a pH from 3.0-7.0, such as a pH from 3.5-5.5 to the sizing composition.

Optionally, the high-performance sizing composition may contain a polyurethane film former such as Baybond 2297 (Bayer), Baybond PU403 (Bayer), and W-290H (Chemtura) or an epoxy/polyurethane film former such as Epi-Rez 5520-W-60 (Hexion Specialties Chemicals Incorporated).

The polyurethane film former increases strand integrity and the mechanical fatigue performance by toughening the resin/size interphase. The toughened resin interphase results in a final composite product that has an improved resistance to cracking and has increased or improved mechanical properties such as improved strength. The urethane film former may be present in the sizing composition an amount from about 2 to about 10% by weight solids, such as an amount from 2.5-7.5% by weight solids, or about 5.1% by weight solids. Suitable polyurethane dispersions include polyurethane emulsions such as Hydrosize® U1-01, U1-03, U2-01, U4-01, U5-01, U6-01, U6-03 and U7-01 available from Hydrosize® Technologies, Inc (Raleigh, N.C., USA)

The high-performance sizing composition further includes water to dissolve or disperse the active solids for coating. Water may be added in amounts sufficient to dilute the aqueous sizing composition to a viscosity that is suitable for its application to glass fibers and to achieve the desired solids content on the fibers. The mix solids content of the size may be from about 1.0 to about 15%, such as from about 5 to about 10%, or from about 8.0 to about 8.5%. In some exemplary embodiments, the sizing composition may contain up to approximately 92% water.

The high-performance sizing composition may optionally include one more additives. In some exemplary embodiments, the additives include fire retardants, nanoparticles, lubricants, such as a fatty acid ester, a fatty alcohol, fatty amine salts, a mineral oil, or mixtures thereof; complexing agents, such as an EDTA derivative, a gallic acid derivative or a phosphonic acid derivative; antifoaming agents, such as a silicone or a vegetable oil; a polyol; an acid used to control the pH during the hydrolysis of the coupling agent, for example acetic acid, lactic acid or citric acid; cationic polymers; emulsifiers; viscosity modifiers; stabilizers; acids; and other bases.

In some embodiments, the total content of additives in the sizing composition is in the range from about 0.1 to about 15% by weight, in some embodiments from 1 to 5% by weight (dry extract solids content).

Unidirectional Laminate

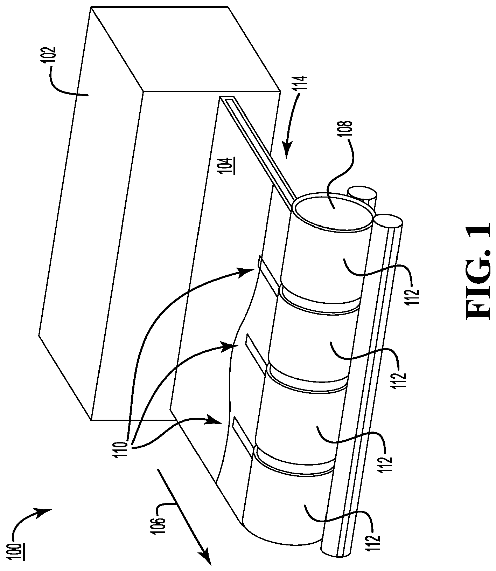

A conventional system 100 for forming a structural laminate made from a composite material, will be described with reference to Figure 1. In the system 100, a machine 102 continuously produces a fiber reinforced material in the form of an infusible fabric 104. The fabric includes substantially unidirectional fibers, meaning that at least 80% of the fibers extend in a single direction (generally in the warp direction). In some exemplary embodiments, the fabric is a 100% unidirectional fabric. In some exemplary embodiments, the fabric includes less than 5% weft fibers, or less than 2% weft fibers, or less than 1% weft fibers. In some exemplary embodiments, the fabric includes 100% unidirectional fibers and is free of weft fibers.

As noted above, the fabric 104 includes unidirectional fibers that extend substantially along a length of the fabric 104 (i.e., parallel to the arrow 106). As the fabric 104 exits the machine 102 and travels in a direction indicated by the arrow 106, the fabric 104 is wound at a roll area 108. A winder or other conveying means pulls the fabric 104 from the machine 102 to the roll area 108.

Blades or other cutting means form slits 110 in the fabric 104 prior to the roll area 108. In this manner, discrete rolls 112 of the fabric 104 are formed.

Once a predetermined quantity of the fabric 104 has been wound to the roll area 108, a manual cut 114 is made across the width of the fabric 104, thereby separating the rolls 112 from the fabric 104 exiting the machine 102. When it is time to form the laminate, one or more rolls 112 are layered into a mold (not pictured). Once a desired thickness and shape is obtained within the mold, a resin is introduced, such as by an infusion process, and cured to form a laminate.

In certain embodiments, the matrix resin is comprised of a resin selected from: polyester resins, vinylester resins, polyurethane resins, a bio-based resin, and a styrene-free resin.

The unidirectional laminate has a high fiber loading of at least 50% fiber weight fraction (FWF), or at least 60% by volume, or at least 70% by volume. In some exemplary embodiments, the unidirectional laminate has a fiber weight fraction of at least 72%, such as at least 73%, at least 74%, or at least 75% by volume.

In certain exemplary embodiments, the invention relates to the discovery of a correlation between fatigue performance and tensile modulus of a unidirectional laminate and the viscoelastic properties of the composite material making up the laminate. Accordingly, by tuning the viscoelastic properties of a composite material, fatigue performance and tensile modulus of a unidirectional laminate produced therefrom is optimized.

The particular viscoelastic properties in question include the composite's main relaxation temperature ($T\alpha$) and storage modulus drop ($\Delta E'$). These viscoelastic properties are governed by the glass composition, glass fiber/matrix interface properties, resin type, and manufacturing process. If at least these viscoelastic properties are tuned within specific ranges, high tensile modulus (at least about 45 MPa) and fatigue performance are achieved in unidirectional laminates at a fiber volume fraction of at least 50% by volume.

The particular composite viscoelastic properties include tuning the composite's main relaxation temperature ($T\alpha$) to a range between about 110 °C and 140 °C, such as between 112 °C and 135 °C, 115 °C and 130 °C, 115 °C and 125 °C, and 117 °C and 125 °C. Optionally, the composite's main relaxation temperature ($T\alpha$) may be in a range between about 115 °C and 125 °C. Additionally, the storage modulus drop ($\Delta E'$) is tuned to achieve a modulus between about 15 and 35 GPa, including between about 12 GPa and 30 GPa, and 20 and 25 GPa. Optionally, the composite's storage modulus drop ($\Delta E'$) may be between about 20 and 25 GPa. By selecting materials that achieve the above defined viscoelastic properties, a unidirectional laminate may be formed having a tensile modulus of at least about 45 GPa and a fatigue performance of at least 450 MPa at 1MM cycles. In some exemplary embodiments, the unidirectional laminate formed by meeting the above-described viscoelastic properties have a tensile modulus of at least 47 GPa, including at least 50 GPa, at least 52 GPa, at least 55 GPa, at least 57 GPa, and at least 57 GPa. In some exemplary embodiments, the unidirectional laminate formed by meeting the above-described viscoelastic properties have a fatigue performance of at least 460 MPa, or at least 475 MPa, or at least 480 MPa, or at least 500 MPa, at 1MM cycles.

EXAMPLES

The following paragraphs describe and demonstrate exemplary embodiments of the high fatigue and modulus unidirectional laminate. The exemplary embodiments are provided solely for the purpose of illustration and are not to be construed as limitations of the present disclosure, as many variations thereof are possible without departing from the spirit and scope of the present disclosure.

Example 1

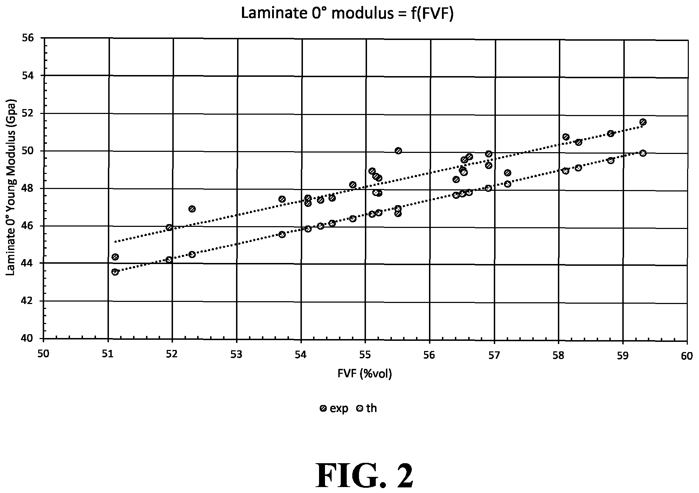

Figure 2 graphically illustrates the relationship between laminate modulus and the laminate fiber volume fraction, using both a theoretical and experimental model. The theoretical modulus was calculated based on the law of mixtures using $E_{H-Glass}$ = 82 Gpa; $E_{NGH-Glass}$ = 84 Gpa; $E_{matrix}$ = 3.3 Gpa in the following equation:

$$E_1 = E_f V_f + E_m\left(1 - V_f\right)$$

Where $E_f$ represents the modulus of the fibers, $E_m$ represents the modulus of the matrix and $V_f$ represents the volume fraction of the fibers.

As illustrated in Figure 2, at a FVF between 50% and 57%, the laminates demonstrated a 0° Young's modulus between about 45 GPa and 55 GPa, under both the theoretical and experimental models.

Example 2

Unidirectional fiberglass reinforced polyester laminates with thicknesses of about 2 mm were obtained by vacuum infusion of filament wound continuous reinforcements composed of 17-micron diameter single fibers. The laminates were cured for 24 hours at room temperature and the post-cured for 15 hours at 80 °C. The laminates were vacuum infused with a resin system. The resin system is defined as a medium reactive orthophthalic polyester resin with relatively high heat resistance and mechanical properties. Typical resin cast properties for this material are a tensile modulus of 3.3 GPa and a tensile elongation between 3% and 4%.

Dynamic mechanical analysis (DMA) was conducted on coupons measuring 60 mm (l) x 10 mm (w) using the 3-point bending mode. Temperature sweep parameters included a frequency of 1 Hz and a temperature range of 2 °C/min. The amplitude was set to ensure measurements within the linear viscoelasticity domain. Typical DMA scans for this type of laminate range from 0 °C to 200 °C. T$\alpha$ was determined on tan$\delta$ curve (peak maximum).

High fatigue performances (at least 45 GPa after 1 MM Cycle, per ASTM E 739-91 were achieved when the reinforcement was optimized by tuning the glass composition and/or the size chemistry, impacting the viscoelastic properties in the following ranges: T$_g$ between 115 °C and 125 °C, ∆E' between 18 and 23 GPa.

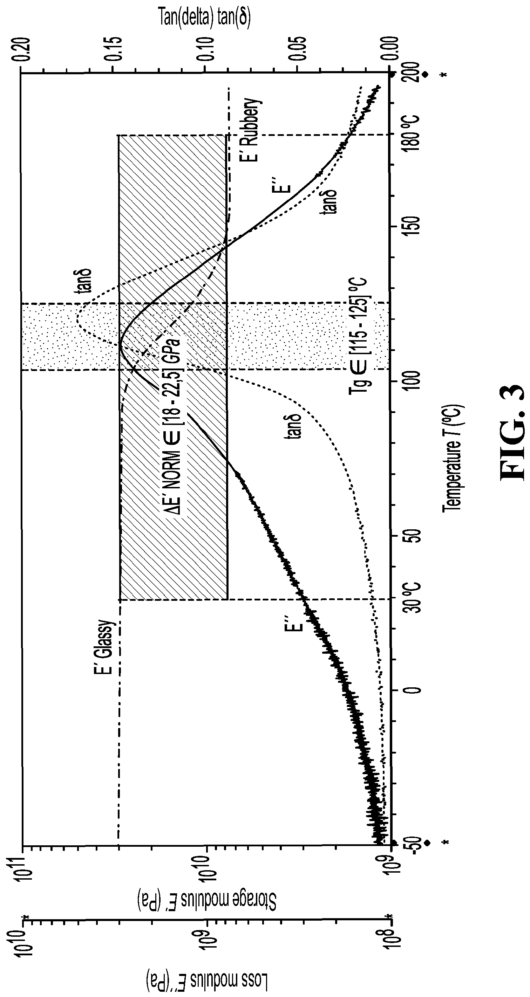

Such tuned viscoelastic properties are illustrated in Figure 3. Figure 3 illustrates the range of DMA properties, T$\alpha$ and ∆E'. The T$\alpha$ is the position of the peak on the tan$\delta$ curve. The ∆E NORM is the E' glassy - E' rubbery, normalized to 50% FVF. As illustrated in Figure 3, the T$\alpha$ is between a range of 115-125 °C at a ∆E' NORM of 18-25 GPa. In Figure 3, E" illustrates the loss modulus: loss response of the material.

The examples demonstrated that low fatigue values may be seen when one or a combination of the following factors: T$\alpha$ greater than 125 C; FVF greater than 57%, use of a sizing composition without an epoxy film former; and/or a sizing composition without boron salt.

All references to singular characteristics or limitations of the present disclosure shall include the corresponding plural characteristic or limitation, and vice versa, unless otherwise specified or clearly implied to the contrary by the context in which the reference is made.

All combinations of method or process steps as used herein can be performed in any order, unless otherwise specified or clearly implied to the contrary by the context in which the referenced combination is made.

The composite materials, structural components, and corresponding manufacturing methods of the present disclosure can comprise, consist of, or consist essentially of the essential elements and limitations of the disclosure as described herein, as well as any additional or optional components, or limitations described herein or otherwise useful in fiber-reinforced composite materials.

To the extent that the terms "include," "includes," or "including" are used in the specification or the claims, they are intended to be inclusive in a manner similar to the term "comprising" as that term is interpreted when employed as a transitional word in a claim. Furthermore, to the extent that the term "or" is employed (*e.g.,* A or B), it is intended to mean "A or B or both A and B." When the applicants intend to indicate "only A or B but not both," then the term "only A or B but not both" will be employed. Thus, use of the term "or" herein is the inclusive, and not the exclusive use. In the present disclosure, the words "a" or "an" are to be taken to include both the singular and the plural. Conversely, any reference to plural items shall, where appropriate, include the singular.

In some embodiments, it may be possible to utilize the various inventive concepts in combination with one another (*e.g.,* one or more of the exemplary embodiments may be utilized in combination with each other). Additionally, any particular element recited as relating to a particularly disclosed embodiment should be interpreted as available for use with all disclosed embodiments, unless incorporation of the particular element would be contradictory to the express terms of the embodiment. Additional advantages and modifications will be readily apparent to those skilled in the art.

**Claims**

1. A unidirectional laminate comprising a glass fiber reinforced composite material, **characterized in that**:

   the reinforced composite material has a main relaxation temperature ($T\alpha$) in a range between 110 °C and 140 °C, said composite comprising a plurality of unidirectional reinforcement fibers coated with a sizing composition and a matrix resin,
   wherein the unidirectional laminate has a tensile modulus of at least 45 GPa at a fiber volume fraction greater than or equal to 50% and fatigue mechanical performance of at least 450 MPa at 1 MM cycles, measured according to ASTM E 739-91,
   wherein the reinforcement fibers are glass fibers.

2. The unidirectional laminate of claim 1, wherein the reinforced composite has a storage modulus drop ($\Delta E'$) between 15 and 35 GPa.

3. The unidirectional laminate of any preceding claim, wherein the glass fibers have an elastic modulus of at least 85 GPa, optionally at least 88 GPa, optionally at least 89 GPa; optionally wherein the glass fibers have a tensile strength of at least 3,500 MPa.

4. The unidirectional laminate of any preceding claim, wherein the glass fibers have a glass composition comprising from 55% by weight to 65% by weight $SiO_2$.

5. The unidirectional laminate of any preceding claim, wherein the glass fibers have a glass composition comprising from 17% by weight to 27% by weight $Al_2O_3$.

6. The unidirectional laminate of any preceding claim, wherein the glass fibers have a glass composition comprising from 8% by weight to 15% by weight MgO.

7. The unidirectional laminate of claims 5 and 6, wherein the ratio of the weight percent of $Al_2O_3$ and MgO in the glass composition is no greater than 2.0, optionally no greater than 1.9, optionally no greater than 1.8.

8. The unidirectional laminate of any preceding claim, wherein the glass fibers have a glass composition comprising from 7% by weight to 12% by weight CaO.

9. The unidirectional laminate of claims 6 and 8, wherein the ratio of the weight percent of MgO to CaO in the glass composition is at least 1.2.

10. The unidirectional laminate of any one of any preceding claim, wherein the glass fibers have a glass composition comprising no more than 1% by weight $Na_2O$, and/or no more than 2% by weight $TiO_2$, and/or no more than 2% by weight $Fe_2O_3$, and/or no more than 0.5% by weight $Li_2O$.

11. The unidirectional laminate of any preceding claim, wherein the sizing composition comprises an epoxy film former, a silane package, one or more lubricants, and an anti-static agent.

12. The unidirectional laminate of claim 11, wherein the sizing composition further includes one or more thermoplastic co-film formers; optionally wherein the thermoplastic co-film former is selected from the group consisting of: an unsaturated polyester co-film former, a functionalized epoxy polyvinyl acetate (PVAc) co-film former, and a polyvinyl pyrrolidone (PVP) co- film former; optionally wherein the thermoplastic co-film former is present in the sizing composition in an amount from 1 to 10 wt.% solids.

13. The unidirectional laminate of claim 11 or claim 12, wherein the sizing composition further includes a boron-containing compound.

14. A wind turbine blade comprising the unidirectional laminate of any one of claims 1 to 13.

**Patentansprüche**

1. Unidirektionales Laminat, umfassend ein glasfaserverstärktes Verbundmaterial, **dadurch gekennzeichnet, dass**:

   das verstärkte Verbundmaterial eine Hauptrelaxationstemperatur ($T\alpha$) in einem Bereich zwischen 110 °C und 140 °C aufweist, der Verbundwerkstoff umfassend eine Vielzahl von unidirektionalen Verstärkungsfasern, die mit einer Schlichtezusammensetzung und einem Matrixharz beschichtet sind,

wobei das unidirektionale Laminat einen Zugmodul von mindestens 45 GPa bei einem Faservolumenanteil größer als oder gleich 50 % und eine mechanische Ermüdungsfestigkeit von mindestens 450 MPa bei 1-mm-Zyklen, gemessen gemäß ASTM E 739-91, aufweist, wobei die Verstärkungsfasern Glasfasern sind.

2. Unidirektionales Laminat nach Anspruch 1, wobei der verstärkte Verbundwerkstoff einen Speichermodulabfall ($\Delta$E') zwischen 15 und 35 GPa aufweist.

3. Unidirektionales Laminat nach einem der vorstehenden Ansprüche, wobei die Glasfasern einen Elastizitätsmodul von mindestens 85 GPa, optional mindestens 88 GPa, optional mindestens 89 GPa aufweisen, wobei die Glasfasern optional eine Zugfestigkeit von mindestens 3.500 MPa aufweisen.

4. Unidirektionales Laminat nach einem der vorstehenden Ansprüche, wobei die Glasfasern eine Glaszusammensetzung aufweisen, umfassend zu von 55 Gew.-% bis 65 Gew.-% $SiO_2$.

5. Unidirektionales Laminat nach einem der vorstehenden Ansprüche, wobei die Glasfasern eine Glaszusammensetzung aufweisen, umfassend zu von 17 Gew.-% bis 27 Gew.-% $Al_2O_3$.

6. Unidirektionales Laminat nach einem der vorstehenden Ansprüche, wobei die Glasfasern eine Glaszusammensetzung aufweisen, umfassend zu von 8 Gew.-% bis 15 Gew.-% MgO.

7. Unidirektionales Laminat nach den Ansprüchen 5 und 6, wobei das Gewichtsprozentverhältnis von $Al_2O_3$ und MgO in der Glaszusammensetzung nicht größer als 2,0, optional nicht größer als 1,9, optional nicht größer als 1,8 ist.

8. Unidirektionales Laminat nach einem der vorstehenden Ansprüche, wobei die Glasfasern eine Glaszusammensetzung aufweisen, umfassend zu von 7 Gew.-% bis 12 Gew.-% CaO.

9. Unidirektionales Laminat nach den Ansprüchen 6 und 8, wobei das Gewichtsprozentverhältnis von MgO zu CaO in der Glaszusammensetzung mindestens 1,2 ist.

10. Unidirektionales Laminat nach einem der vorstehenden Ansprüche, wobei die Glasfasern eine Glaszusammensetzung aufweisen, umfassend zu nicht mehr als 1 Gew.-% $Na_2O$ und/oder nicht mehr als 2 Gew.-% $TiO_2$ und/oder nicht mehr als 2 Gew.-% $Fe_2O_3$ und/oder nicht mehr als 0,5 Gew.-% $Li_2O$.

11. Unidirektionales Laminat nach einem der vorstehenden Ansprüche, wobei die Schlichtezusammensetzung einen Epoxidfilmbildner, eine Silanpackung, ein oder mehrere Schmiermittel und ein Antistatikmittel umfasst.

12. Unidirektionales Laminat nach Anspruch 11, wobei die Schlichtezusammensetzung ferner einen oder mehrere thermoplastische Co-Filmbildner einschließt; wobei der thermoplastische Co-Filmbildner optional aus der Gruppe ausgewählt ist, bestehend aus einem ungesättigten Polyester-Co-Filmbildner, einem funktionalisierten Epoxid-Polyvinylacetat-Co-Filmbildner (PVAc-Co-Filmbildner) und einem Polyvinylpyrrolidon-Co-Filmbildner (PVP-Co-Filmbildner); wobei der thermoplastische Co-Filmbildner in der Schlichtezusammensetzung optional in einer Menge von 1 bis 10 Gew.-% Feststoffe vorhanden ist.

13. Unidirektionales Laminat nach Anspruch 11 oder Anspruch 12, wobei die Schlichtezusammensetzung ferner eine borhaltige Verbindung einschließt.

14. Windturbinenschaufel, umfassend das unidirektionale Laminat nach einem der Ansprüche 1 bis 13.

**Revendications**

1. Stratifié unidirectionnel comprenant un matériau composite renforcé de fibres de verre, **caractérisé en ce que** :

le matériau composite renforcé a une température de relaxation principale (T$\alpha$) dans une plage entre 110 °C et 140 °C, ledit composite comprenant une pluralité de fibres de renforcement unidirectionnelles revêtues d'une composition d'ensimage et d'une résine matricielle, dans lequel le stratifié unidirectionnel a un module de traction d'au moins 45 GPa à une fraction volumique de fibres supérieure ou égale à 50 % et une performance mécanique en fatigue d'au moins 450 MPa à 1 MM cycles, mesurée selon la norme ASTM E 739-91, dans lequel les fibres de renforcement sont des fibres de verre.

2. Stratifié unidirectionnel selon la revendication 1, dans lequel le composite renforcé a une chute de module de stockage ($\Delta$E') entre 15 et 35 GPa.

3. Stratifié unidirectionnel selon une quelconque revendication précédente, dans lequel les fibres de verre ont un module d'élasticité d'au moins 85 GPa, éventuellement d'au moins 88 GPa, éventuellement d'au moins 89 GPa ; éventuellement dans lequel les fibres de verre ont une résistance à la traction d'au moins 3 500 MPa.

**4.** Stratifié unidirectionnel selon une quelconque revendication précédente, dans lequel les fibres de verre ont une composition de verre comprenant de 55 % en poids à 65 % en poids de $SiO_2$.

**5.** Stratifié unidirectionnel selon une quelconque revendication précédente, dans lequel les fibres de verre ont une composition de verre comprenant de 17 % en poids à 27 % en poids de $Al_2O_3$.

**6.** Stratifié unidirectionnel selon une quelconque revendication précédente, dans lequel les fibres de verre ont une composition de verre comprenant de 8 % en poids à 15 % en poids de MgO.

**7.** Stratifié unidirectionnel selon les revendications 5 et 6, dans lequel le rapport des pourcentages en poids d'$Al_2O_3$ et de MgO dans la composition de verre n'est pas supérieur à 2,0, éventuellement pas supérieur à 1,9, éventuellement pas supérieur à 1,8.

**8.** Stratifié unidirectionnel selon une quelconque revendication précédente, dans lequel les fibres de verre ont une composition de verre comprenant de 7 % en poids à 12 % en poids de CaO.

**9.** Stratifié unidirectionnel selon les revendications 6 et 8, dans lequel le rapport des pourcentages en poids de MgO et de CaO dans la composition de verre est d'au moins 1,2.

**10.** Stratifié unidirectionnel selon l'une quelconque de l'une quelconque revendication précédente, dans lequel les fibres de verre ont une composition de verre ne comprenant pas plus de 1 % en poids de $Na_2O$, et/ou pas plus de 2 % en poids de $TiO_2$, et/ou pas plus de 2 % en poids de $Fe_2O_3$, et/ou pas plus de 0,5 % en poids de $Li_2O$.

**11.** Stratifié unidirectionnel selon une quelconque revendication précédente, dans lequel la composition d'ensimage comprend une substance filmogène d'époxy, une encapsulation de silane, un ou plusieurs lubrifiants et un agent antistatique.

**12.** Stratifié unidirectionnel selon la revendication 11, dans lequel la composition d'ensimage comporte en outre une ou plusieurs co-substances filmogènes thermoplastiques ; éventuellement, dans lequel la co-substance filmogène thermoplastique est choisie dans le groupe constitué par : une co-substance filmogène de polyester insaturé, une co-substance filmogène d'acétate de polyvinyle époxy fonctionnalisé (PVAc), et une co-substance filmogène de pyrrolidone de polyvinyle (PVP) ; éventuellement dans lequel la co-substance filmogène thermoplastique est présente dans la composition d'ensimage dans une quantité de 1 à 10 % en poids de matières solides.

**13.** Stratifié unidirectionnel selon la revendication 11 ou la revendication 12, dans lequel la composition d'ensimage comporte en outre un composé contenant du bore.

**14.** Pale de turbine éolienne comprenant le stratifié unidirectionnel selon l'une quelconque des revendications 1 à 13.

**FIG. 1**

EP 4 069 487 B1

Laminate 0° modulus = f(FVF)

FIG. 2

EP 4 069 487 B1

**FIG. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 19214303
- WO 2019126252 A1

- US 8129018 B

**Non-patent literature cited in the description**

- **S. KORKIAKOSKI et al.** *International Journal of Fatigue*, 2016, vol. 85, 114-129

- Glass Fiber and Measuring Facilities at the U.S. Naval Ordnance Laboratory. *Report Number NOLTR*, 23 June 1965, 65-87